# EUROPÄISCHE PATENTSCHRIFT

(11) **EP 0 546 406 B1**
(45) Veröffentlichungstag und Bekanntmachung des Hinweises auf die Patenterteilung: **02.08.1995**
(21) Anmeldenummer: 92120379.0
(22) Anmeldetag: 28.11.1992
(51) Int. Cl.: C09C 3/12, C03C 25/02

(54) **Verwendung von organofunktionellen Polysiloxanen zum Modifizieren der Oberfläche feinteiliger Partikel**
Use of organo-functional polysiloxanes for modifying the surfaces of fine particles
Utilisation de polysiloxanes organofonctionnels pour modifier les surfaces de fines particules

(30) Priorität: 11.12.1991 DE 4140793
(43) Veröffentlichungstag der Anmeldung: 16.06.1993
(73) Patentinhaber: Th. Goldschmidt AG, 45127 Essen (DE)
(72) Erfinder: Höhner, Werner, W-5620 Velbert 11 (DE); Schaefer, Dietmar, Dr., W-4320 Hattingen 16 (DE)

(56) Entgegenhaltungen:
- EP-A- 0 257 423
- EP-A- 0 468 305
- DE-C- 3 820 294
- US-A- 2 891 923

## Beschreibung

Die Erfindung betrifft die Verwendung von Organopolysiloxanen mit über Kohlenstoffatome an Siliciumatome gebundenen Epoxy- und langkettigen Alkylgruppen zum Modifizieren der Oberfläche feinteiliger Partikel, wie Pigmente und Füllstoffe, oder von Glasfasern.

Es ist bekannt, die Eigenschaften von Pigmenten und Füllstoffen durch Aufbringen von siliciumorganischen Verbindungen auf deren Oberflächen zu verbessern. Durch eine solche Beschichtung sollen die Einarbeitung und Dispergierung der Pigmente oder Füllstoffe in Lacke, Dispersionsfarben, Kunststoffe, Toner, Baustoffe, Emails oder dgl. erleichtert werden. Durch eine solche Beschichtung mit siliciumorganischen Verbindungen soll außerdem die Agglomeration von Pigmenten und Füllstoffen bei der Lagerung und Verarbeitung vermieden werden. Es ist außerdem erwünscht, den Staubanfall bei der Lagerung von Pigmenten und Füllstoffen zu reduzieren.

Dieser Stand der Technik ist in der EP-A-0 373 426 (A2) zusammenfassend dargestellt worden. Gegenstand der EP-A-0 373 426 sind anorganische Farb- und Magnetpigmente mit einem Gehalt von mindestens 0,1 Gew.-% und höchstens 5 Gew.-% an einem oder mehreren Polyorganosiloxanen, die eine Viskosität von 100 bis 100 000 mPa.s und eine relative Molmasse von 500 bis 500 000 aufweisen, keine reaktiven oder vernetzend wirkenden Gruppen enthalten, pro Molekül mindestens eine Si-Alkyl- und/oder Si-Arylgruppe mit 9 bis 25 C-Atomen enthalten, wobei diese Gruppen zu 7 bis 70 Gew.-% im Polyorganosiloxan vorhanden sind, und die übrigen Organoreste im Polyorganosiloxan 1 bis 8 C-Atome aufweisen.

Die in der vorgenannten EP-A-0 373 426 benannten Organosiliciumverbindungen sind zwar zur Beschichtung von Farbpigmenten in vielen Fällen geeignet, jedoch versagen sie häufig bei Füllstoffen, wie z.B. Magnesium- oder Aluminiumoxiden oder deren Oxidhydraten. Häufig ist auch eine bessere Dispergierbarkeit der beschichteten Teilchen und ein besseres Anhaften der Beschichtung an den Oberflächen der Teilchen erwünscht.

In der britischen Patentanmeldung GB 2 244 489 wird ein Füllstoff beansprucht, der mit einer Schicht vernetzter Siliconelastomeren versehen ist, die chemisch mit der Oberfläche des anorganischen Kerns verbunden sind. Aus den dort genannten Beispielen geht hervor, daß zunächst hochverzweigte Siliconelastomere mit einer Vielzahl an reaktiven Si-OH-Gruppen (auch als "rubbery reactive silicone" bezeichnet) hergestellt werden, die nach Auftrag auf den anorganischen Füllstoff auf diesem bei 250°C 4 Stunden lang ausgehärtet werden müssen. Das Siliconelastomer ist das Produkt einer Vernetzungsreaktion zwischen einem "multifunktionell terminierten" Polysiloxan und einem Silanvernetzer. Diese Beschichtungsmaterialien sind vernetzte Elastomere, die die mechanischen Eigenschaften, wie Dehnbarkeit und Zähigkeit, von gefüllten Polymeren verbessern sollen.

Die vorliegende Erfindung befaßt sich mit dem technischen Problem, siliciumorganische Verbindungen zu finden, die möglichst universell zur Beschichtung von feinteiligen Partikeln verschiedener Art, insbesondere auch von Füllstoffen, geeignet sind. Dabei sollen die beschichteten Teilchen u.a. möglichst gute anwendungstechnische Eigenschaften, wie verbesserte Dispergierbarkeit und verbesserte Verträglichkeit in organischen Medien, wie Lacken, Kunststoffen, Mineralölen, synthetischen Ölen, pflanzlichen Ölen oder Weichmachern, aufweisen. Die Beschichtung soll auf den Oberflächen der Teilchen gut haften, so daß eine Permanenz der Eigenschaften gewährleistet ist.

Die EP-A-0 373 426 lehrt, daß das verwendete Organopolysiloxan frei von reaktiven Gruppen sein soll. Überraschend wurde gefunden, daß die Organopolysiloxane aber gerade dann als Beschichtungsmittel auf Pigmenten und Füllstoffen verbesserte Eigenschaften aufweisen, wenn in Abkehr der Lehre der EP-A-0 373 426 in dem Polysiloxanmolekül Gruppen an Si-Atome gebunden sind, die eine gewisse, abgestufte Reaktivität aufweisen.

Gegenstand der Erfindung ist deshalb die Verwendung von Organopolysiloxanen mit über Kohlenstoffatome an Siliciumatome gebundenen Epoxy- und langkettigen Alkylgruppen der allgemeinen Formel 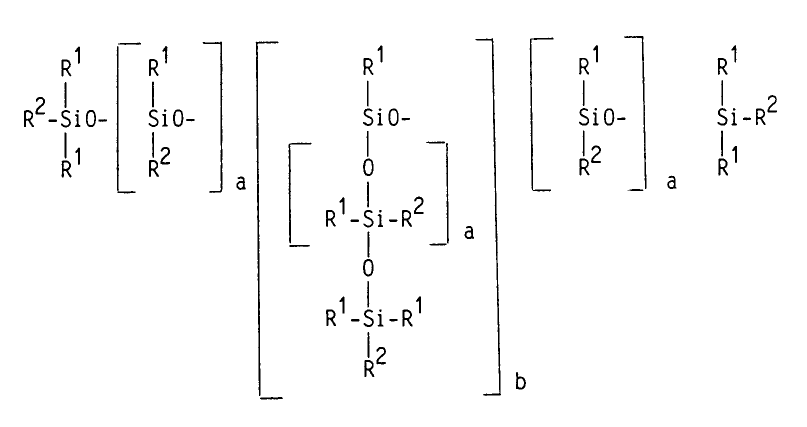
- R¹ =: Alkylrest mit 1 bis 4 Kohlenstoffatomen oder Phenylrest, wobei jedoch mindestens 90 % der R¹-Reste CH₃-Reste sind,
- R² =: 50 bis 99 % haben die Bedeutung der Reste R¹, 1 bis 50 % haben die Bedeutung der Reste R³ und R⁴,
- R³ =: Rest der Formel 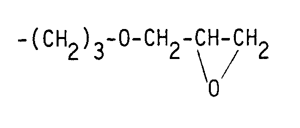 und/oder 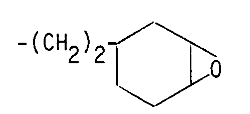
- R⁴ =: geradkettiger oder verzweigter Alkylrest mit 6 bis 30 Kohlenstoffatomen, wobei das Verhältnis der Reste R³ : R⁴ = 1 : 25 bis 10 : 1 beträgt, jedoch im durchschnittlichen Molekül mindestens ein Rest R³ und mindestens ein Rest R⁴ vorhanden sein müssen,
- a =: 1 bis 500,
- b =: 0 bis 10,
zum Modifizieren der Oberfläche feinteiliger Partikel, wie Pigmente und Füllstoffe, oder von Glasfasern.

R¹ ist ein Alkylrest mit 1 bis 4 Kohlenstoffatomen oder ein Phenylrest. Mindestens 90 % der Reste R¹ sollen Methylreste sein. Besonders bevorzugt ist, daß alle Reste R¹ Methylreste sind. Jedoch kann in vielen Fällen die Verträglichkeit mit Lacken durch die Einführung von Phenylresten verbessert werden.

50 bis 99 % der Gruppen R² können die Bedeutung des Restes R¹ haben. Die restlichen Gruppen R² kennzeichnen die organofunktionellen Gruppen, die aus zwei unterschiedlichen Typen gebildet sind: Der eine organofunktionelle Rest, als Rest R³ bezeichnet, ist ein Epoxyrest der Formel 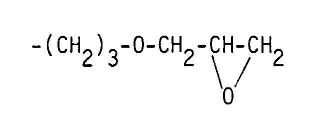
und/oder der Formel 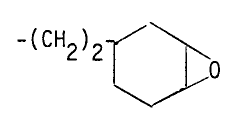
Dieser Epoxyrest gibt dem erfindungsgemäß zu verwendenden Organopolysiloxan die gewünschte Substantivität und abgestufte Reaktivität.

Der andere organofunktionelle Rest R⁴ ist ein geradkettiger oder verzweigter Alkylrest mit 6 bis 30 Kohlenstoffatomen. Vorzugsweise weist dieser Rest R⁴ 8 bis 20 Kohlenstoffatome auf.

Im Molekül des erfindungsgemäß zu verwendenden Organopolysiloxans sind 1 bis 50 % der Reste R² die Reste R³ und R⁴. Das Verhältnis der Reste R³ zu R⁴ soll 1 : 25 bis 10 : 1 betragen. Dabei muß aber die Bedingung erfüllt sein, daß im durchschnittlichen Organopolysiloxanmolekül mindestens jeweils 1 Rest R³ und mindestens 1 Rest R⁴ vorhanden sein müssen.

Die Reste R³ bzw. R⁴ können end- und/oder seitenständig gebunden sein. Organopolysiloxane mit seitenständig gebundenen Resten R³ und R⁴ sind bevorzugt.

Die Struktur des Organopolysiloxans wird durch den Wert der Indices a und b bestimmt. a kennzeichnet den Gehalt an difunktionellen Siloxy-Einheiten, während b den Grad der Verzweigung angibt. a hat einen Wert von 1 bis 500, vorzugsweise 2 bis 100. b hat einen Wert von 0 bis 100 und ist vorzugsweise 0 bis 5.

Die Verbindungen können in an sich bekannter Weise durch Anlagerung von α-Olefinen und Allylglycidethern bzw. Vinylcyclohexenoxid an Organopolysiloxane, bei denen der entsprechende Anteil an Resten R² durch Rest -H ersetzt ist, in Gegenwart geeigneter Katalysatoren, wie Platinverbindungen, z.B. H₂PtCl₆, oder in Gegenwart von auf Trägermaterialien aufgebrachtem Platin hergestellt werden.

Die erfindungsgemäß zu verwendenden Modifizierungsmittel werden im allgemeinen direkt auf die zu modifizierenden Partikel aufgebracht. Dies kann durch Aufsprühen der Modifizierungsmittel, gegebenenfalls in Form von konzentrierten Lösungen geschehen, wobei dann die Lösungsmittel abgezogen werden müssen. Die Modifizierung kann durch mechanisches Aufbringen der Modifizierungsmittel, zum Beispiel durch Rühren, Kneten oder Walzen geschehen. Es ist auch möglich, die zu modifizierenden Partikel erst in dem organischen Medium, zum Beispiel einem Bindemittel oder Weichmacher, zu verteilen und dieser Verteilung dann die erfindungsgemäß zu verwendenden Modifizierungsmittel in der gewünschten Menge zuzusetzen.

Das Modifizierungsmittel wird im allgemeinen in einer Menge von 0,1 bis 5 Gew.-%, bezogen auf zu modifizierende Partikel, verwendet. Bevorzugt ist ein Zusatz von 0,3 bis 2 Gew.-%.

Als Füllstoffe, die erfindungsgemäß modifiziert werden, können z.B. Talkum, Calciumcarbonat, Dolomit, Glimmer, Wollastonit, Kaolin sowie Aluminiumhydroxid, Magnesiumhydroxid und Aluminiumoxid eingesetzt werden.

Pigmente können Weißpigmente wie z.B. TiO₂-Pigmente oder Buntpigmente wie Fe₂O₃-Pigmente sein. Als weitere Pigmente können Zinnoxide, Chromoxide, Molybdatpigmente oder auch Ruß verwendet werden. Eine umfassende Aufstellung der Pigmente bzw. der Füllstoffe kann dem Handbuch "Kunststoff-Additive", 3. Ausgabe, Carl Hanser Verlag, 1990, Seiten 549 ff. und Seiten 663 ff., entnommen werden.

In den folgenden Beispielen werden die anwendungstechnischen Eigenschaften der erfindungsgemäß verwendeten Verbindungen noch näher erläutert.

### Anwendungstechnische Beispiele

Bei der Einarbeitung von Pigmenten und Füllstoffen in Lacke, Farben und Kunststoffe werden vom Verarbeiter günstige Rheologieeigenschaften erwartet.

Insbesondere wird bei hohen Pigment- und Füllstoffgehalten niedrige Viskosität gewünscht.

Zur Überprüfung der Wirksamkeit der erfindungsgemäß zu verwendenden Modifizierungsmittel werden die Pigmente und Füllstoffe 1 Std. in einer Schüttelmühle (SCANDEX Typ BAS 20) mit 15-mm-Kugeln und 0,2 bis 1 Gew.-% Zusatz der zu prüfenden Organopolysiloxane behandelt und anschließend in Di-2-ethylhexylphthalat (DOP) bzw. Paraffinöl (30 cp) unter Verwendung einer Mizer-Scheibe (φ = 4 cm) zunächst 1 Min. mit 2000 UPM (v = 4,25 m/s) und anschließend 3 Min. mit 4000 UPM (v = 8,5 m/s) dispergiert.

Die Viskositäten der resultierenden Dispersionen werden gemäß DIN-Norm 53 019 mit einem CONTRAVES-RHEOMAT 115 bei einer Meßtemperatur von T = 25°C mit dem Meßsystem MS-DIN 125 bei einer Drehzahl von 5,15 UPM und einer Grenzfrequenz von 1 Hz ermittelt.

Als Beschichtungsmittel wird das folgende, erfindungsgemäß zu verwendende, modifizierte Organopolysiloxan eingesetzt: 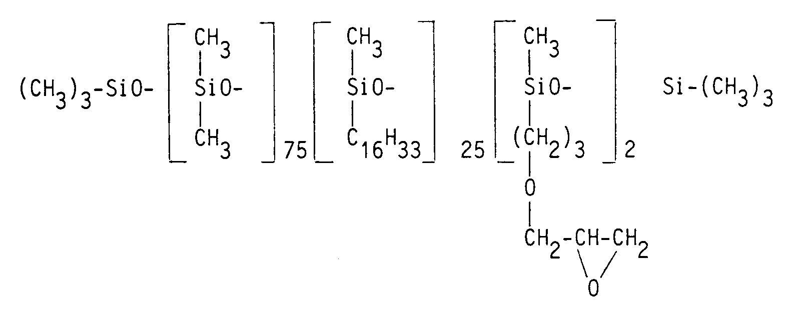
Für die Vergleichsversuche wird als Beschichtungsmittel das dem Stand der Technik entsprechende Organopolysiloxan mit der folgenden Formel eingesetzt: 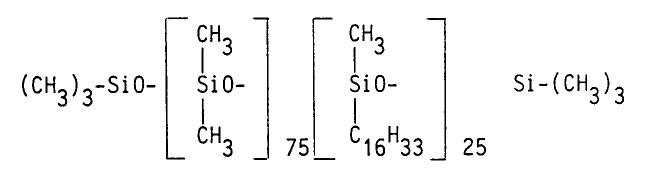
Für die Beschichtung werden als Basismaterialien folgende Füllstoffe eingesetzt:
Magnesiumoxidhydrat [Mg(OH)₂]
Aluminiumoxidhydrat [Al(OH)₃]
Die Dispersionen enthalten im jeweiligen Medium 51 Gew.-% [Mg(OH)₂] bzw. 54 Gew.-% [Al(OH)₃]. Sie weisen folgende Viskositäten in cp auf:

### Viskosität in Paraffinöl

| 1 Gew.-% Zusatz | | |
|---|---|---|
| erfindungsgemäß: | Mg(OH)₂ = 45000 | Al(OH)₃ = 2800 |
| Vergleich: | Mg(OH)₂ = > 60000 | Al(OH)₃ = 12000 |

| 0,5 Gew.-% Zusatz | | |
|---|---|---|
| erfindungsgemäß: | Mg(OH)₂ = 50000 | Al(OH)₃ = 6800 |
| Vergleich: | Mg(OH)₂ = > 60000 | Al(OH)₃ = 7700 |

### Viskosität in DOP

| 1 Gew.-% Zusatz | | |
|---|---|---|
| erfindungsgemäß: | Mg(OH)₂ = 12000 | Al(OH)₃ = 2500 |
| Vergleich: | Mg(OH)₂ = 33000 | Al(OH)₃ = 2500 |

| 0,5 Gew.-% Zusatz | | |
|---|---|---|
| erfindungsgemäß: | Mg(OH)₂ = 16000 | Al(OH)₃ = 2900 |
| Vergleich: | Mg(OH)₂ = 34000 | Al(OH)₃ = 2900 |

Unbeschichtetes Basismaterial weist bei 40 Gew.-% Füllstoffanteil im DOP bzw. Paraffinöl nicht mehr auswertbare Pastenkonsistenz auf.

## Patentansprüche

1. Verwendung von Organopolysiloxanen mit über Kohlenstoffatome an Siliciumatome gebundenen Epoxy- und langkettigen Alkylgruppen der allgemeinen Formel 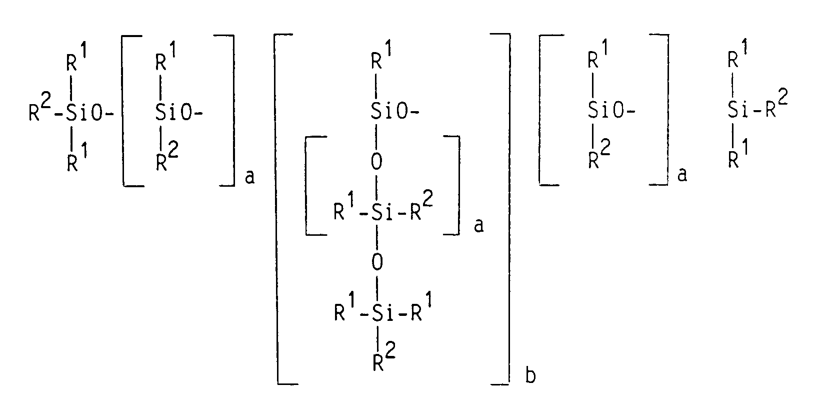
R¹ = Alkylrest mit 1 bis 4 Kohlenstoffatomen oder Phenylrest, wobei jedoch mindestens 90 % der R¹-Reste CH₃-Reste sind,
R² = 50 bis 99 % haben die Bedeutung der Reste R¹, 1 bis 50 % haben die Bedeutung der Reste R³ und R⁴,
R³ = Rest der Formel 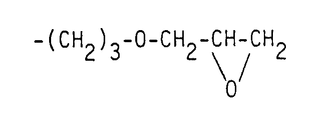 und/oder 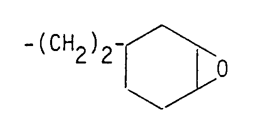
R⁴ = geradkettiger oder verzweigter Alkylrest mit 6 bis 30 Kohlenstoffatomen,
wobei das Verhältnis der Reste R³ : R⁴ = 1 : 25 bis 10 : 1 beträgt, jedoch im durchschnittlichen Molekül mindestens ein Rest R³ und mindestens ein Rest R⁴ vorhanden sein müssen,
a = 1 bis 500,
b = 0 bis 10,
zum Modifizieren der Oberfläche feinteiliger Partikel, wie Pigmente und Füllstoffe, oder von Glasfasern.

## Claims

1. Use of organopolysiloxanes containing epoxy groups and long-chain alkyl groups bonded to silicon atoms via carbon atoms, of the general formula 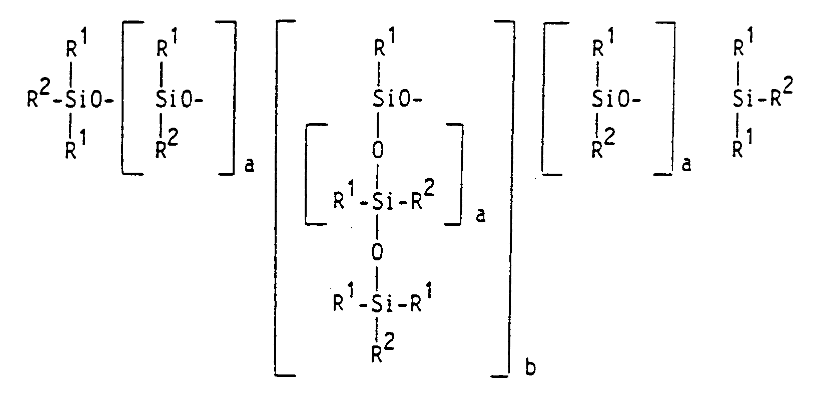
R¹ is an alkyl radical having 1 to 4 carbon atoms or a phenyl radical, but at least 90 % of the R¹ radicals are CH₃ radicals,
from 50 to 99 % of the radicals R² are as defined for the radicals R¹, and
from 1 to 50 % of the radicals R² are as defined for the radicals R³ and R⁴, where
R³ is a radical of formula 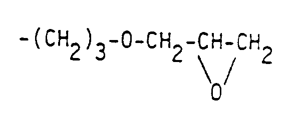 and/or 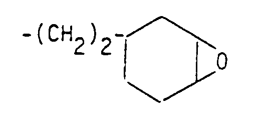
R⁴ is a straight-chain or branched alkyl radical having 6 to 30 carbon atoms, where the ratio between the radicals R³ and R⁴ is from 1:25 to 10:1, but at least one radical R³ and at least one radical R⁴ must be present in the average molecule,
a = 1 to 500, and
b = 0 to 10,
for modifying the surface of finely divided particles, such as pigments and fillers, or of glass fibres.

## Revendications

1. Utilisation d'organopolysiloxanes avec des groupes époxy et des groupes alkyles à chaîne longue liés à des atomes de silicium par l'intermédiaire des atomes de carbone, répondant à la formule générale : 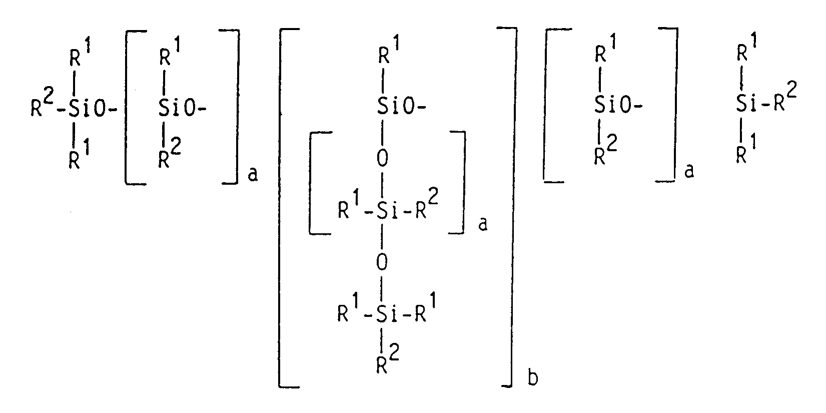
R¹ = un reste alkyle ayant de 1 à 4 atomes de carbone, ou un reste phényle, au moins 90 % des restes R¹ étant toutefois des restes CH₃,
R² : 50 à 99 % des restes R² ont la signification des restes R¹, et 1 à 50 % des restes R² ont la signification des restes R³ et R⁴,
R³ = un reste ayant la formule 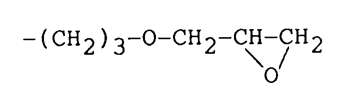 et/ou 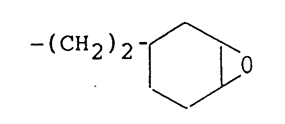
R⁴ = un reste alkyle à chaîne droite ou ramifiée ayant de 6 à 30 atomes de carbone, le rapport des restes R³ : R⁴ valant de 1:25 à 10:1, la molécule moyenne devant contenir toutefois au moins un reste R³ et au moins un reste R⁴,
a = 1 à 500,
b = 0 à 10,
pour modifier la surface de particules finement divisées, comme des pigments et des charges, ou de fibres de verre.
